Europäisches Patentamt

European Patent Office

Office européen des brevets

(11) Publication number: **0 044 143**

**A1**

(12) **EUROPEAN PATENT APPLICATION**

(21) Application number: 81302743.0

(22) Date of filing: 18.06.81

(51) Int. Cl.³: **C 08 L 51/04**
**A 47 F 1/12, C 08 L 25/10**

(30) Priority: 11.07.80 US 168951

(43) Date of publication of application:
20.01.82 Bulletin 82/3

(84) Designated Contracting States:
BE DE FR GB IT LU NL

(71) Applicant: THE MEAD CORPORATION
Courthouse Plaza Northeast
Dayton, Ohio 45463(US)

(72) Inventor: Spamer, William S.
530, Salewind Drive
Roswell Georgia 30079(US)

(72) Inventor: Preis, Allen D.
150, Meadow Lane
Peninsula Ohio 44264(US)

(74) Representative: Hepworth, John Malcolm
J.M. Hepworth & Co. Furnival House 14/18 High Holborn
London, WC1V 6DE(GB)

(54) Low friction material and extrusion process.

(57) A material for forming a gravity feed type track with a low coefficient of friction on its surfaces and which is formed from a mixture of from 95.0 to 99.5 percent by weight of high impact polystyrene. The material includes from 0.5 to 5.0 percent by weight of an organopolysiloxane fluid having silicon bonded hydrocarbon radicals selected from a group consisting of methyl, ethyl and phenyl radicals and which have from 1.9 to 3.0 hydrocarbon radicals per silicon radical.

EP 0 044 143 A1

- 1 -

## LOW FRICTION MATERIAL
## AND EXTRUSION PROCESS

### TECHNICAL FIELD

This invention relates to a material having a low coefficient of friction which is composed of a mixture of high impact polystyrene and certain organopolysiloxane fluids and the process of extruding such mixture. The material is particularly suitable for use as a track for the gravity feeding of packages and for bottles.

### BACKGROUND ART

One type of track for the gravity feeding of packages or bottles from the back to the front of a shelf on a display stand is represented by U.S. Patent 2,218,444 issued October 15th, 1940, which discloses a metal channel intended primarily for use in conjunction with milk bottles in refrigerators. The metal channel does not lend itself well for economical production procedures.

Another type of gravity feed device includes a downwardly tilted planar support surface over which a plastic feeder belt is

- 2 -

0044143

arranged to slide as disclosed in U.S. Patent 4,128,177 issued December 5th, 1978. As each shelf of a display stand needs several such devices each of which includes a belt, support surface and two rollers, the construction of a display stand utilizing such devices is complicated and involves costly construction.

It has been recognized for a long time that it would be economical to construct a gravity feed track of a plastics material. However, the coefficient of friction of these plastics was so high that an excessive tilt of the track was required for bottles or packages to slide. Excessive tilt to the track can result in the bottles falling rather than sliding.

Organopolysiloxane release fluids for use as mold release agents have been known for a long time as illustrated by U.S. Patent 2,666,685 issued on January 19, 1954. This mold release composition, which also included other ingredients, was applied to the mold each time an article was molded. To eliminate the labour and time involved in spraying the release agent on the mold each time, it is now common to incorporate a small amount of certain mold release agents, such as a dimethylpolysiloxane fluid, in the plastic resin being molded. The dimethylpolysiloxane fluid not only aids in the release of the resin from the mold but also sometimes aids in the processability of the resin. Dimethylpolysiloxane fluid is normally added to resins in an amount from approximately 0.1 to 0.25 percent by weight of the resin. The addition of dimethylpolysiloxane fluid to various resins is disclosed in Dow Corning Bulletin 22-290 dated 9/74. Tracks formed of a combination of high impact polystyrene and silicone are disclosed in U.S. Patent Application Number 098,876 entitled "Gravity Feed Shelf" filed November 30, 1979. The track configuration is disclosed in U.S.

Patent Application Number 129,096 entitled "Merchandising Display Shelf Element" filed March 10, 1980.

DISCLOSURE OF THE INVENTION

A plastic track with an exceptionally low coefficient of friction is formed by extruding a mixture of from 95.0 to 99.5 percent by weight of high impact polystyrene and from 0.5 to 5.0 percent by weight of an organopolysiloxane fluid having silicon bonded hydrocarbon radicals selected from a group consisting of methyl, ethyl and phenyl radicals and which have from 1.9 to 3.0 hydrocarbon radicals per silicon radical. Suitable organopolysiloxane fluids include dimethylsiloxane, diethylsiloxane, phenylmethylsiloxane and copolymers thereof. These siloxane fluids may have any viscosity but preferably from 1000 to 60,000 centistokes. Preferably the mixture includes from 1.5 to 3.0 percent by weight organopolysiloxane fluid.

The tracks are formed by extruding a mixture of high impact polystyrene and the desired organopolysiloxane. High impact polystyrene is normally extruded at a temperature of approximately $335^{\circ}F$ at the gate of the extruder and $360^{\circ}F$ at the die. It has been discovered that the coefficient of friction of the track can be significantly decreased if the gate temperature is increased to approximately $365^{\circ}F$ to $400^{\circ}F$ and the die temperature to $425^{\circ}F$ to $475^{\circ}F$. In addition, the temperatures in the various feeding zones of the extrusion were reduced by approximately $20^{\circ}$ to $25^{\circ}$ below the temperature normally employed in extruding high impact polystyrene. Optimal temperatures are approximately $385^{\circ}F$ at the gate and $450^{\circ}F$ at the die. It is thought that the higher extrusion temperatures at the gate and die result in a lower coefficient of friction because a greater amount of organopolysiloxane is on or near the surface of the track. It is also thought that the higher gate and die temperatures allow the molten resin to better fill out the radii in the die itself which leads to a more uniform surface resulting in a lower coefficient of friction. The coefficient of friction of the surface of the track can be lowered even more by burnishing the surface shortly after it has been extruded and is still warm. This results in removal of the portion of the skin of the track which is thought to have a lower concentration of organopolysiloxane than the internal matrix of the track.

## DESCRIPTION OF DRAWINGS

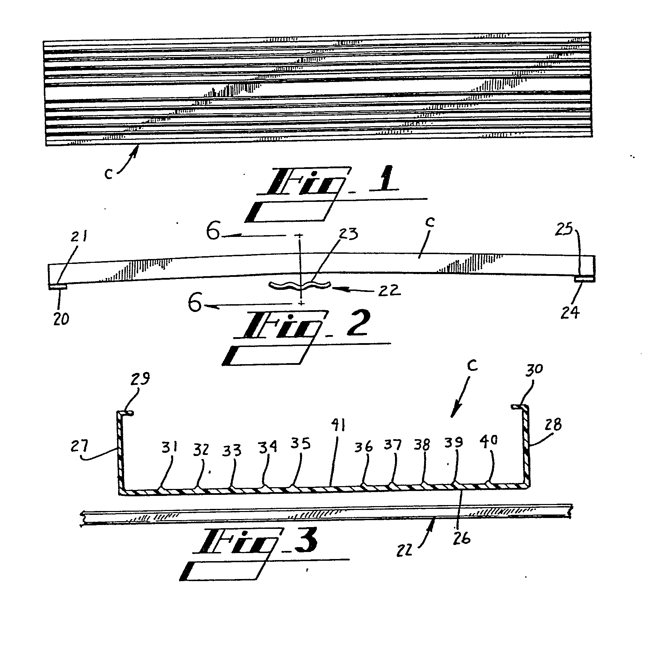

While the coefficient of friction is reduced regardless of the configuration of the track, the coefficient of friction can be reduced even more by constructing a track of a particular configuration. The track shown in the drawings has an especially low coefficient of friction, Figure 1 is a top plan view of an extruded channel shaped chute type of track formed of a mixture of high impact polystyrene and dimethylpolysiloxane; Figure 2 is a side view of the chute type of track shown in Figure 1; and Figure 3 is a cross-sectional view taken along the line designated 3-3 in Figure 2.

The chute type of track C is especially adapted for use in conjunction with the display of various types of bottles. The chute C is placed on a shelf such as illustrated in U.S. Patent Application Number 098,876 filed November 30th, 1979. The bottles are placed on the chute C which tilts towards the front part of the shelf as shown in Figure 1 of said application.

The angle of the tilt of the shelf 12 shown in Figure 1 of said application from horizontal may vary somewhat but is preferably between $3\frac{1}{2}^{\circ}$ minimum tilt to a maximum tilt of approximately $8^{\circ}$. The angle of tilt for most applications should be approximately $6^{\circ}$ from horizontal.

As is apparent from Figures 1, 2 and 3, a chute C includes a central web panel 26 and a pair of side flange panels 27 and 28 which are integrally formed with the web panel 26. Inwardly projecting guide strips 29 and 30 are formed integrally with flange panels 27 and 28 as is apparent in Figure 3.

For the purpose of minimizing friction between the bottoms of the bottles and the upper surface of web panel 26, a plurality of upwardly projecting ribs 31-40 are provided and are of generally triangular cross-sectional configuration.

As a means of disposing of undesired moisture and debris accumulation a central trough designated by the numeral 41 is formed in the upper surface of web panel 26 and is disposed between the ribs 35 and 36. This trough can serve as a retention cavity for suitable retractable spring means (not shown) which, if desired, could be employed to afford an additional force urging a row of bottles forwardly and downwardly.

BEST MODE OF CARRYING OUT

The preferred organopolysiloxane is dimethylsiloxane with a viscosity of from 20,000 to 40,000 centistokes. Dimethylsiloxane is generally incompatible with high impact polystyrene. Consequently, special steps must be taken in order to insure that the dimethylsiloxane is well dispersed throughout the polystyrene prior to extrusion. The preferred method of extrusion is to mix one-half of the high impact polystyrene with the entire amount of dimethylsiloxane to be used in an extruder and extrude pellets of the mixture. These pellets can then be mixed with the remaining polystyrene pellets in an extruder and extruded into the desired track. In order to achieve a low coefficient of friction it is necessary that the temperatures in the feed zone of the extruder be $20^{\circ}F-25^{\circ}F$ lower than the temperatures normally employed in extruding such polystyrene. More importantly, the temperatures at the gate must be approximately $50^{\circ}F$ higher than normal temperatures at the gate and approximately $90^{\circ}F$ higher than normal at the die. It has been found that the preferred temperature at the gate is approximately $380^{\circ}F$ and $450^{\circ}F$ at the die. The amount of pressure employed is approximately 1100 psi.

Immediately after extrusion, the sliding surface of the track may be burnished to remove a portion of the skin. This can be accomplished by rubbing oak wood lightly over the sliding surface of the track. The track formed by this process is a combination of organopolysiloxane and polystyrene of an exceptionally low coefficient of friction. These tracks are especially useful in gravity feed systems to be used on display stands in retail stores.

## EXAMPLE

A comparison is made of the coefficient of friction of various tracks extruded from high impact polystyrene and a combination of high impact polystyrene and dimethylpolysiloxane. The dimethylpolysiloxane was a fluid of approximately 30,000 centistokes, produced by Dow Corning and is referred to as Dow Corning[R] 200 Fluid. Several different methods of mixing the dimethylpolysiloxane and the high impact polystyrene were compared. In Mixing Technique A, the dimethylpolysiloxane was added directly to the extruder along with the high impact polystyrene. In Mixing Technique B, the dimethylpolysiloxane was added to the high impact polystyrene pellets and mixed in an extruder, extruded into pellets and then extruded again into the desired shape. Best results have been achieved with Mixing Technique C whereby one-half of the high impact polystyrene pellets were mixed with all of the dimethylpolysiloxane and pellets extruded. These pellets were then mixed with the remaining pellets of pure high impact polystyrene and extruded into track form. The results of these tests are set forth in Table 1. Table 2 sets forth the temperatures at which high impact polystyrene is commonly extruded and also the temperatures at which high impact polystyrene containing a dimethylpolysiloxane additive, the composition used in the present invention, is extruded.

The friction properties of the various tracks were determined by the time required for a 2 liter polyethylene terephthalate bottle filled with water to travel 20 inches on the track which was maintained at a $5\frac{1}{2}^{\circ}$ angle. The times were based on an average of 5 trials recorded on a chronograph watch. The sliding surfaces of the tracks were lightly burnished with oak wood immediately after extrusion while the plastic was still warm.

TABLE 1

COMPARISON OF THE FRICTION OF TRACKS OF VARIOUS COMPOSITIONS

| Track No. | % Dimethyl-siloxane in Final Mixture | Mixing Technique | Surface Appearance | Extrudate Consistency | Time (Sec) | Velocity (ft/min) |
|---|---|---|---|---|---|---|
| 1 | 0 | -- | -- | -- | won't slide | 0 |
| 2 | 1.00 | A | -- | -- | 1.79 | 55.8 |
| 3 | 2.00 | A | -- | -- | 1.56 | 64.1 |
| 4 | 2.00 | B | Fair | Very poor | 1.49 | 67.1 |
| 5 | 2.00 | C | Excellent | Excellent | 1.74 | 57.5 |

TABLE 2

EXTRUDER  CONDITIONS

| Extruder Temperatures ($^{o}$F) | Pure High Impact Polystyrene | High Impact Polystyrene with Dimethylsiloxane Additive |
|---|---|---|
| Zone 1 | 300 | 280 |
| 2 | 335 | 310 |
| 3 | 365 | 325 |
| 4 | 385 | 360 |
| 5 | 410 | 385 |
| Gate | 335 | 385 |
| Die | 360 | 450 |
| Melt Temp. ($^{o}$F) | 375 | 357 |
| Melt Pressure (PSI) | 1100 | 1100 |

- 10 -

LOW FRICTION MATERIAL
AND EXTRUSION PROCESS

CLAIMS

1. A material with a low coefficient of friction on its surface which is formed of a mixture of from 95.0 to 99.5 per cent by weight of high impact polystyrene, characterized by from 0.5 to 5.0 percent by weight of an organopolysiloxane fluid having silicon bonded hydrocarbon radicals selected from a group consisting of methyl, ethyl and phenyl radicals and which have from 1.9 to 3.0 hydrocarbon radicals per silicon radical.

2. A material according to Claim 1 further characterized in that the organopolysiloxane fluid has a viscosity of between 20,000 and 40,000 centistokes, in that the silicon bonded hydrocarbon radical is methyl and in that there are two methyl radicals per silicon radical.

3. A material according to Claim 1 or Claim 2 further characterized in that the mixture contains from 97.0 to 98.5 percent by weight of high impact polystyrene and from 1.5 to 3.0 by weight of organopolysiloxane fluid.

4.    A material according to any of the preceding claims further characterized in that the material track having a channel (C) consisting of a web panel (26) and a pair of flange panels (27,28) integrally formed along the edges of said web panel.

5.    A material according to Claim 4 further characterized in that a medial trough (41) is formed in the upper surface of said web panel and a plurality of ribs (31-40) are formed in the upper surface of said web panel on each side of said trough.

6.    A process of extruding an article formed from a mixture of from 95.0 to 99.5 percent by weight of high impact polystyrene characterized by from 0.5 to 5.0 percent by weight of dimethylpolysiloxane fluid which method comprises mixing and extruding the dimethylpolysiloxane and polystyrene in an extruder with the temperature at the gate being approximately $365^{\circ}F$ to $400^{\circ}F$ and the temperature at the die being between $425^{\circ}F$ and $475^{\circ}F$.

7.    A process according to claim 6 further characterized in that the dimethylpolysiloxane has a viscosity of between 20,000 and 40,000 centistokes, and in that the temperature at the gate is approximately $385^{\circ}F$ and the temperature at the die is approximately $450^{\circ}F$.

8.    A process according to claim 6 or claim 7 further characterized by the additional step of burnishing one or more of the surfaces of the article in order to decrease the coefficient of friction.

Fig. 1

Fig. 2

Fig. 3

# European Patent Office

## EUROPEAN SEARCH REPORT

Application number

EP 81 30 4743

| DOCUMENTS CONSIDERED TO BE RELEVANT | | | CLASSIFICATION OF THE APPLICATION (Int Cl.³) |
|---|---|---|---|
| Category | Citation of document with indication, where appropriate, of relevant passages | Relevant to claim | C 08 L 51/04<br>A 47 F 1/12<br>C 08 L 25/10 |
| DX | US - A - 2 218 444 (G.S. VINEYARD)<br>* Figure 1; page 1, column 2, lines 10-16, 25-30 * | 4,5 | |
| X | US - A - 1 715 276 (H.D. BURNS)<br>* Figure 5; page 1, lines 57-65 * | 4,5 | |
| D | US - A - 2 666 685 (M.C. HOMMEL)<br>* Claims * | 1-3 | **TECHNICAL FIELDS SEARCHED (Int. Cl.³)** |
| X | FR - A - 2 056 624 (MITSUBISHI)<br>* Claims * | 1-3 | C 08 L 51/04<br>A 47 F 1/12<br>C 08 L 25/10 |
| X | US - A - 3 239 579 (E.A. BARBER et al.)<br>* Claims; examples; page 1, lines 17-27 * | 1-3,6-8 | |
| DE | EP - A - 0 031 652 (MEAD CORP.)<br>* Whole document * | 1-8 | **CATEGORY OF CITED DOCUMENTS** |
| | US - A - 3 279 618 (J.E. BERGSTEDT)<br>* Figure 2 * | 4,5 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | | | &: member of the same patent family, corresponding document |

| | The present search report has been drawn up for all claims | | |
|---|---|---|---|
| Place of search<br>The Hague | Date of completion of the search<br>09-10-1981 | Examiner<br>FOUQUIER | |

EPO Form 1503 1 06.78